# EUROPEAN PATENT APPLICATION

(11) **EP 0 567 237 A1**
(43) Date of publication of application: **27.10.1993**
(21) Application number: 93302441.6
(22) Date of filing: 29.03.1993
(51) Int. Cl.: G06F 12/06

(54) **Method and apparatus for increasing usable memory space**

(30) Priority: 24.04.1992 US 873137
(71) Applicant: International Business Machines Corporation, Armonk, N.Y. 10504 (US)
(72) Inventor: Hernandez, Luis Antonio, Boca Raton, Florida 33427-2103 (US); Medford, Mitchell Eric, Delray Beach, Florida 33445 (US); Tashakori, Esmaeil, Delray Beach, Florida 33445 (US)
(74) Representative: Burt, Roger James, Dr.

(57) **Abstract**

s7 According to the present invention, in a computer system using a microprocessor in the 80386 ; 80486 ; or 80486 family of microprocessors, and having multiple megabytes of memory, the last 128 kilobytes of address memory in the first megabyte address section of system is "reserved" for system BIOS. The last 1024 bytes in the address range of the entire memory is reserved for initiation instruction fetch from the system BIOS ; and the approximately 127 kilobytes of address section of system memory preceding the last 1000 bytes address of the memory address range is unreserved and available for system memory. Preferably, the invention also allows for the selective reservation of the final entire 128 kilobytes of memory.

## Description

### BACKGROUND OF THE INVENTION

This invention relates generally to the operations of Central Processor Units (CPU's) in Computers, and more particularly to the allocation of address segments associated with the CPU to control computer functions. In even more particular aspects, this invention relates to the allocation of address segments of system memory for control functions in CPU's utilizing certain types of Intel microprocessor chips associated with multiple megabytes of system memory in personal computer systems.

Personal computer systems in general and IBM personal computers in particular have attained widespread use for providing computer power to many segments of today's modern society. Personal computer systems can usually be defined as a desktop, floor standing, or portable microcomputer that consists of a system unit having a single system processor and associated volatile and non-volatile memory, a display monitor, a keyboard, one or more diskette drives, a fixed disk storage, and an optional printer. One of the distinguishing characteristics of these systems is the use of a mother board or system planar to electrically connect these components together. These systems are designed primarily to give independent computing power to a single user and are inexpensively priced for purchase by individuals or small businesses. Examples of such personal computer systems are IBM's PERSONAL COMPUTERAT and IBM's PERSONAL COMPUTER SYSTEM/2 Models 25, 30, L40SX, 50, 55, 65, 70, 80, 90 and 95.

These systems can be classified into two general families. The first family, usually referred to as Family I Models, use a bus architecture exemplified by the IBM PERSONAL COMPUTER AT and other similar machines. The second family, referred to as Family II Models, use IBM's MICRO CHANNEL bus architecture exemplified by IBM's PERSONAL SYSTEM/2 Models 50 through 95. The Family I models typically have used the popular INTEL 8088 or 8086 microprocessor as the system processor. These processors have the ability to address one megabyte of memory. The Family II models typically use the high speed INTEL 80286, 80386, and 80486 microprocessors which can operate either in a real mode to emulate the slower speed INTEL 8086 microprocessor or a protected mode which extends the addressing range from 1 megabyte to 16 megabytes and even up to 4 Gigabytes for some models.

When developing computers using the 80286, 80386, and 80486 microprocessor, one design consideration often mandated for the new computer systems is that of permitting the new system to utilize software programs that are written for and operate on available computers which have less memory such as the Family I type of computer without alteration of the programs. This is often referred to as "backward compatibility". The 80286, 80386, and 80486 microprocessor accommodate such design considerations by their operation in the real mode.

When backward compatibility is a design constraint there are many things that must be incorporated into the design of the new computer system to assure that such backward compatibility is obtained. One such requirement is the maintaining of memory location addresses of certain functions which control the operation of the computer. For example, with the IBM personal computers that use chips from the 8086 family of chips, and have associated therewith one megabyte of system memory storage in the form of Dynamic Random Access Memory (DRAM), conventional design has designated the last 128 kilobytes of memory address (i.e. from address 0E0000 to address OEFFFF) as "reserved" for the information from the Read Only Memory BIOS Input Output (ROM-BIOS) chip. (Note: In the present application, address memory locations are all given in hexadecimal notation). The BIOS function is conventionally hard coded in the ROM chip and assigned an address location in system memory. The microprocessor may read the BIOS instructions directly from the ROM chip, but more typically this BIOS code is written from the ROM chip into the system memory, the DRAM of the system memory being substantially faster than the ROM chip. Since the DRAM must be initialized each time the computer is turned on, the DRAM not being configured to store information when the computer is turned off, those programs which relate to the operation of the computer are maintained in "hard coded" or non-volatile memory on the main circuit board such as the ROM chip and are read into the volatile memory for execution when the computer is turned on. Other programs or data may be stored on "hard disks" or "floppy disks".

Since some programs written for the computer systems having one megabyte of memory issue a BIOS call to specific known address locations within the memory range where the BIOS code is located, the memory range of the last 128 kilobytes of memory address in the system memory is "reserved" for the BIOS function and any other associated operating functions of the computer system. This means that these addresses are not available for use as storage for any other memory functions. Moreover, when the processor is initialized, the call goes to an address in this range to perform a Power On Self Test (POST) which entails decoding the information in this memory address range either directly from the ROM chip or from the DRAM system memory.

With CPU's having only one megabyte of memory available, the first code fetch call to BIOS goes to the last 16 bytes of system memory. However, when utilizing Intel microprocessors, such as the 80286, 80386 and 80486 family of microprocessors having multi-megabytes of system memory, at the time the processor is initialized, the code fetch goes to the last 16 bytes of address of the entire system memory. Heretofore since the call was issued to the last 16 byte address in the total addressable system memory the last 128 kilobytes of memory, e.g. from address FE0000 to FFFFFF in 16 megabyte system memory system (which section of memory corresponds in size to the 128 kilobytes in the first megabyte of memory) has been reserved for BIOS instructions. However, the first BIOS instruction read is a jump instruction to the location within the BIOS that is stored in the first megabyte map configuration. POST is then performed from the address location at the end of the first megabyte section of addresses. Thus, two separate sections, each of 128 kilobytes of memory, are reserved and not available for system memory.

### SUMMARY OF THE INVENTION

According to the present invention there is provided a personal computer system having a microprocessor of the 80286; 80386; or 80486 family of microprocessors; said computer system including operating instructions including power on self test in system BIOS in read only memory and at least one fetch code instruction; said computer system including multiple megabytes of addressable system memory associated therewith; said computer system including means to reserve 128 kilobytes of said addressable system memory for the BIOS located at the last 128 kilobytes of system memory address in the first megabyte range of the system memory and to prevent any executing program from addressing said last 128 kilobytes of said system memory locations in said first megabyte range; means to reserve a minor portion of the last 128 kilobytes of addressable system memory total multiple megabyte range for said code fetch instruction and prevent any executing program from addressing said minor portion of the final 128 kilobyte address range yet permit storage of other data in a major portion of address ranges immediately preceding the address range of said minor portion of the final 128 kilobytes of the multiple megabyte storage.

Further according to the present invention there is provided a method of providing extended useful addressable system memory in a personal computer system having a microprocessor of the 80286; 80386; or 80486 series of microprocessors; said computer system including operating instructions including power on self test in system BIOS in read only memory and including at least one code fetch instruction; said computer system including multiple megabytes of addressable memory associated therewith; the method comprising; during power on self testing reserving 128 kilobytes of said addressable memory representing the last 128 kilobytes of system memory addresses in the first megabyte range of system memory to prevent any executing program from addressing said last 128 kilobytes of address locations at any time during operation of the computer system; during power on self testing reserving a minor portion of the final 128 kilobyte address range of said entire system memory for said code fetch instructions and preventing any executing program from addressing said minor portion during system operation while permitting operating programs to address system memory address locations in a major portion of address ranges immediately preceding the address range of said minor portion of the final 128 kilobytes of the multiple megabyte storage during operation.

### DESCRIPTION OF THE DRAWING

Figure 1 is a high level block diagram of the CPU and System Memory of a personal computer utilizing an 80386SX Intel Micro Processor;
Figure 2 is a block diagram of the Memory Address Map of the 16 megabyte DRAM System Storage Memory of Fig. 1; and
Figure 3 is a diagram of the port configuration of the bus interface chip for allowing or preventing general storage in memory address locations of the 127 kilobytes of memory preceding the final 1024 bytes of memory.

### DESCRIPTION OF THE PREFERRED EMBODIMENT

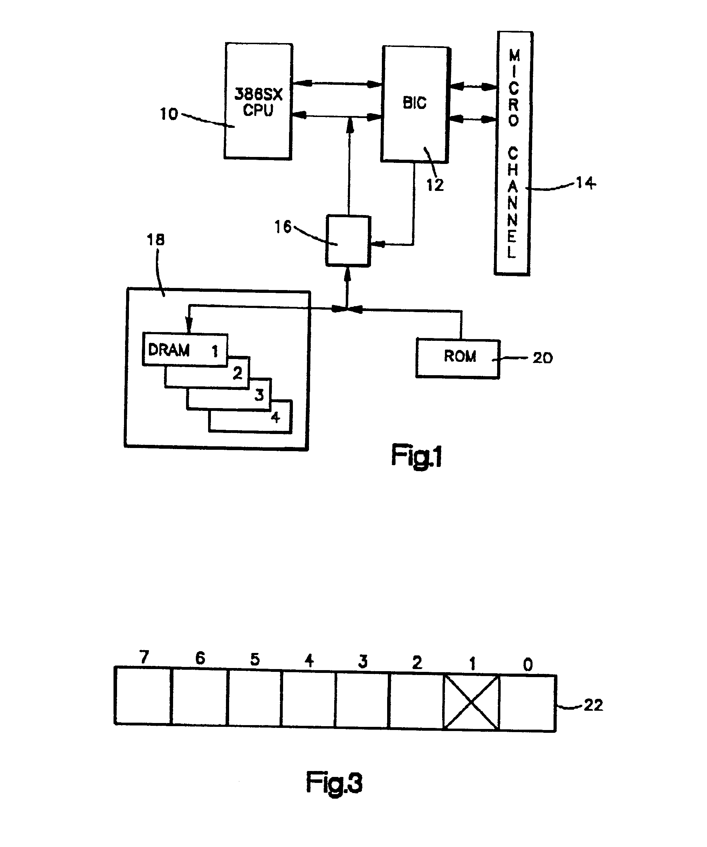

Referring now to the drawing and for the present Figure 1 a high level block diagram of the CPU and associate system memory of the type used in personal computers is shown. A CPU or microprocessor 10 is shown which in the preferred embodiment is Intel 80386SX microprocessor. However, this microprocessor can be any microprocessor capable of operating with multiple megabytes of system memory storage, such as one of the 80286, or 80386 or 80486 family of processors manufactured by Intel Corp.

The microprocessor 10 is connected to a bus interface chip 12 which in turn interfaces between the CPU 10 and a bus channel 14 which can be the IBM MICROCHANNEL bus. Both the CPU 10 and the bus interface chip 12 are connected through a transceiver chip 16 to a system memory 18. The transceiver chip is a conventional buffer such as chip number 74LS245 manufactured by Texas Instruments Company. A ROM memory chip 20 is connected to both the system memory 18 and the transceiver chip 16. The ROM chip 20 contains the BIOS (Basis In- put/Output System) instructions, and any associated operating instructions as is well known. Conventionally, the system memory 18 has 128 kilobytes of addressable system memory allocated for BIOS instructions in the last 128 kilobytes of the first megabyte of the system memory. The operation of the CPU and memory storage under the control of the bus interface chip 12 and transceiver 16 is conventional, and well known in the art.

In the normal course of events, when the computer system is turned "on", the CPU 10 will send a fetch instruction cycle to the bus interface chip 12. The bus interface chip 12 accesses the ROM 20 to provide data to the CPU 10 which will continue executing cycles based on the data received from the ROM chip 20. The first instruction read is located in the last 16 bytes of the addressable system memory space. Conventionally this first instruction is a jump instructions to some other address within the BIOS function in the first megabyte of memory to start the necessary performance of the POST (Power or Self Test).

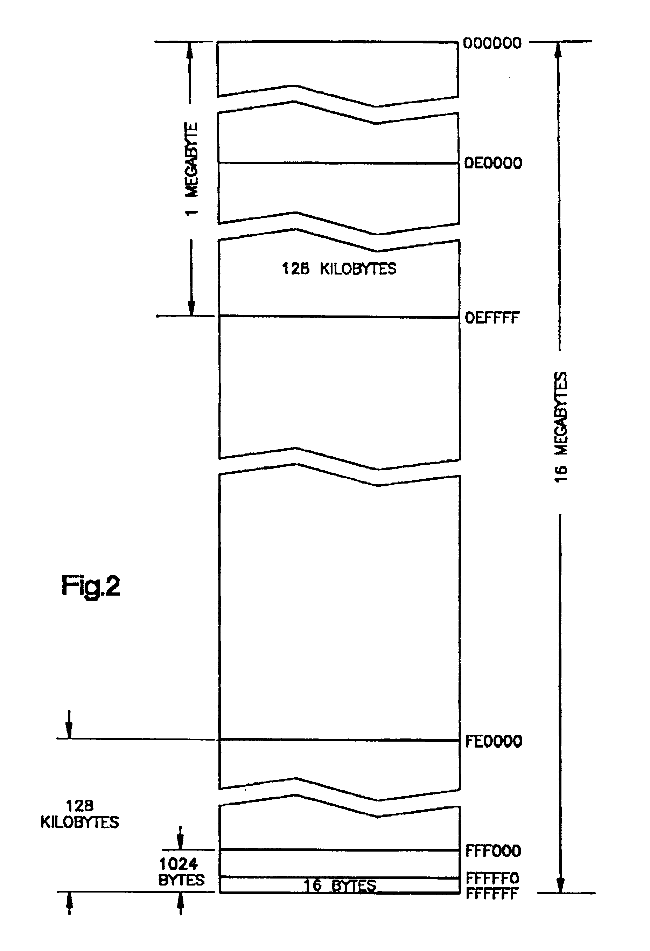

Figure 2 shows the memory address mapping, in a general way, of a conventional 16 megabyte DRAM system memory. As can be seen, the memory addresses extend from address 00000 to FFFFFF constituting 16 megabytes of system memory. As indicated earlier, in those computers where there is only one megabyte of system memory available, the last 128 kilobytes of the one megabyte are reserved for BIOS being read in from the ROM chip 20. This memory is "reserved" by the system responsive to execution of instructions stored in ROM chip 20. The bus interface chip 12 prevents the BIOS from writing verifiable memory test patterns in the last 128 kilobytes of reserved system memory, and this memory is thus "not available" for use as system memory, and thus, this memory address system is "reserved". Hence, any executing program will be prevented from writing to the "reserved addresses".

In order to maintain "backward compatibility" this same 128 kilobytes of memory addresses is reserved in the 16 megabyte memory 18 at addresses 0E0000 to OFFFFF thus constituting the last 128 kilobytes of the first megabyte of system memory. Therefore upon initialization, the BIOS function will "reserve" these address locations and thus, they will not be available for system storage.

Further, as indicated above the Intel 80386SX CPU 10 when initialized will automatically execute an instruction fetch cycle to the last 16 bytes of memory at the very end of the 16th megabyte of memory at address locations FFFFFO to FFFFFF. This address is generated by the CPU as the first address read upon initialization. Thus, this address must also be reserved for this BIOS function. As described, it has been past practice to also reserve the entire final 128 kilobytes of the 16 megabytes for the ROM. However, only the last 16 bytes of address spaces are actually used for the first code fetch instructions. Hence, theoretically all of the 128 kilobytes preceding the last 16 bytes could be freed for use as system memory. Nevertheless, since memory storage locations generally are allocated in 1024 byte segments by presently available software, the final 1024 bytes of memory, i.e. address FFFCOO to FFFFFF are reserved for BIOS Code, and the approximate 127 kilobyte range of FEOOOO to FFFCOO preceding the last 1024 bytes are made available as system memory.

Thus, according to this invention, only the last 1024 bytes of the memory 18 need to be "reserved" for the first instruction fetch. However, as described above, conventional programming of the BIOS has "reserved" the entire final 128 kilobytes of the multi- megabyte range as well as the final 128 kilobytes in the first megabyte of memory. It thus becomes necessary to control the execution of the POST to reserve only the final 1024 bytes of system memory. This is done by placing a flag bit in a designated port 22 of the bus interface chip 12. The port 22 is actually a register contained within the bus interface chip 12 and will signal the microprocessor 10 whether to "reserve" the entire final 128 kilobytes of memory as is conventional in present systems or just the last 1024 bytes leaving the bus interface chip 12 free to utilize the remaining approximately 127 kilobytes from FE0000 to FFFCOO for system memory. This is shown diagrammatically in Figure 3 where the port 22 of the chip 12 is shown with bit assignments from 0 to 7. Bit "assignment 1" is arbitrarily chosen, and when it is set to a logic "1" the approximately 127 kilobytes are freed for use as system memory, and when it is set to logic "0" the entire final 128 kilobytes are reserved in a conventional way. This is accomplished by either allowing or preventing the microprocessor to write to these 127 kilobytes during program execution.

While the invention has been described in which a microprocessor is utilized in conjunction with 16 megabytes of memory, nevertheless, it can be used in any multiple megabyte memory system using a CPU of the 80286; 80386; 80486 family of microprocessors having multi-megabytes of system memory. All that is required is that some minimal final segment of memory be reserved along with the 128 kilobytes of system memory at the end of the first megabyte of memory.

Although several embodiments of this invention have been shown and described, various adaptations and modifications can be made.

## Claims

1. A personal computer system having a microprocessor of the 80286; 80386; or 80486 family of microprocessors;
said computer system including operating instructions including power on self test in system BIOS in read only memory and at least one fetch code instruction;
said computer system including multiple megabytes of addressable system memory associated therewith;
said computer system including means to reserve 128 kilobytes of said addressable system memory for the BIOS located at the last 128 kilobytes of system memory address in the first megabyte range of the system memory and to prevent any executing program from addressing said last 128 kilobytes of said system memory locations in said first megabyte range;
means to reserve a minor portion of the last 128 kilobytes of addressable system memory total multiple megabyte range for said code fetch instruction and prevent any executing program from addressing said minor portion of the final 128 kilobyte address range yet permit storage of other data in a major portion of address ranges immediately preceding the address range of said minor portion of the final 128 kilobytes of the multiple megabyte storage.

2. The computer system as defined in claim 1 wherein said system memory includes 16 megabytes of memory.

3. The computer system as defined in claim 1 or 2 wherein said minor portion of the address range is the final 1024 bytes of storage.

4. The computer system as defined in claim 1, 2 or 3 including means to selectively prevent any executing program from addressing either said minor portion of said final 128 kilobytes only of said memory address or from addressing the entire final 128 kilobytes of system memory.

5. The system as defined in claim 4 wherein said means to selectively prevent any executing program from addressing said memory location includes a flag bit positioned to be read by said microprocessor.

6. A method of providing extended useful addressable system memory a personal computer system having a microprocessor of the 80286; 80386; or 80486 series of microprocessors;
said computer system including operating instructions including power on self test in system BIOS in read only memory and including at least one code fetch instruction;
said computer system including multiple megabytes of addressable memory associated therewith;
the method comprising;
during power on self testing reserving 128 kilobytes of said addressable memory representing the last 128 kilobytes of system memory addresses in the first megabyte range of system memory to prevent any executing program from addressing said last 128 kilobytes of address locations at any time during operation of the computer system; during power on self testing reserving a minor portion of the final 128 kilobyte address range of said entire system memory for said code fetch instructions and preventing any executing program from addressing said minor portion during system operation while permitting operating programs to address system memory address locations in a major portion of address ranges immediately preceding the address range of said minor portion of the final 128 kilobytes of the multiple megabyte storage during operation.

7. The method as defined in claim 6 including the step of selectively preventing executing programs accessing either only said minor portion of said final 128 kilobytes of memory or the entire final 128 kilobytes of memory.
